# EUROPÄISCHE PATENTSCHRIFT

(11) **EP 1 331 429 B1**
(45) Veröffentlichungstag und Bekanntmachung des Hinweises auf die Patenterteilung: **23.06.2004**
(21) Anmeldenummer: 02000745.6
(22) Anmeldetag: 12.01.2002
(51) Int. Cl.: F16L 41/06, F16L 47/00

(54) **Vorrichtung zum Anzapfen von Leitungen**
Apparatus for tapping of conduits
Dispositif pour percer des conduites

(43) Veröffentlichungstag der Anmeldung: 30.07.2003
(73) Patentinhaber: agru Kunststofftechnik GmbH, 4540 Bad Hall (AT)
(72) Erfinder: Severa, Gerald, 4540 Bad Hall (AT); Pörnbacher, Andreas, 4452 Ternberg (AT)
(74) Vertreter: Luderschmidt, Schüler & Partner GbR

(56) Entgegenhaltungen:
- EP-A- 0 723 104
- EP-A- 0 736 718
- DE-A- 10 021 592
- DE-A- 19 641 803

## Beschreibung

Die vorliegende Erfindung betrifft eine Vorrichtung zum Anzapfen von Leitungen, wie beispielsweise Kunststoffrohre, die ein strömendes Fluid führen, um einen Teil des Fluides abzuzweigen und einem Zusatzgerät, einer Zapfstelle o. ä. zuzuführen.

Aus dem Stand der Technik sind unterschiedliche Vorrichtungen zum Anzapfen von Leitungen bekannt, die im wesentlichen auf dem gleichen Prinzip beruhen.

So ist beispielweise aus der US 4,063,844 eine Anbohrvorrichtung bekannt, die einen Hauptteil mit einem fluchtend dahinter angeordneten Befestigungsteil und einen Auslaßteil aufweist. Das Befestigungsteil ist in der Art einer Schelle ausgebildet und kann um ein Kunststoffrohr gespannt werden. In dem Hauptteil ist eine Schneideinrichtung mit einer dem Befestigungsteil zugewandten zylindrischen Schneide angeordnet, die auf ein Innengewinde in dem Hauptteil geschraubt ist. Die Schneideinrichtung kann somit durch Drehen derselben von einer zurückgezogenen Position bis in eine ausgefahrene Position geschraubt werden, wobei die Schneide in der vorgeschobenen Position die Schaffung eines Loches in der Wand des Rohres bewirkt. Im Anschluß daran kann die Schneideinrichtung mitsamt dem entnommenen Wandstück in die zurückgezogene Position zurückgedreht werden, so daß ein Teil des Fluides durch das entstandene Loch und über den Auslaßteil abgezapft werden kann. Um die Schneideinrichtung drehen zu können, ist an deren dem Rohr abgewandten Seite eine Vertiefung zum Eingreifen eines Drehwerkzeuges vorgesehen, wobei der Hauptteil derart ausgebildet ist, daß das Drehwerkzeug, wie beispielsweise ein Imbusschlüssel, bis an die Vertiefung herangeführt werden kann.

Ein wesentlicher Nachteil der bekannten Anbohrvorrichtung besteht darin, daß diese keine ausreichende Dichtigkeit gewährleistet. Nach der Schaffung des Loches in dem Rohr, insbesondere beim Zurückdrehen der Schneideinrichtung in die zurückgezogene Position, kann das im Rohr befindliche Fluid, wie beispielsweise entzündliches Gas, in die Anbohrvorrichtung einströmen. Zwar ist dies gewollt und ein Großteil des Fluides wird durch den Auslaßteil zu einem Zusatzaggregat strömen, aber es besteht auch die Gefahr, daß das Fluid die Schneideinrichtung umströmt, um über das Hauptteil an die Umgebung abgegeben zu werden. Dies ist darauf zurückzuführen, daß das Gewinde, in dem die Schneideinrichtung geführt ist, keine ausreichende Dichtigkeit bewirkt. Erst durch das Entfernen des Drehwerkzeuges und dem Aufbringen einer abdichtenden Kappe wird ein weiteres Ausströmen in die Umgebung verhindert.

Um dem Problem der mangelnden Dichtigkeit zu begegnen, wird in der EP 0 572 817 B1 eine Anbohrarmatur vorgeschlagen, die im wesentlichen den gleichen Aufbau wie die vorgenannte Vorrichtung aufweist. Im Unterschied zu dieser ist jedoch eine Spindel vorgesehen, die innerhalb des Hauptteiles angeordnet ist. Die Spindel ist einerseits drehfest mit der Schneideinrichtung verbunden und ragt andererseits - unabhängig von der Stellung der Schneideinrichtung - aus dem Hauptteil hervor. Die Drehung der Schneideinrichtung wird bei dieser Vorrichtung bewirkt, indem das Drehwerkzeug an dem hervorstehenden Ende angesetzt wird, um die Spindel zu rotieren. Um ein Ausströmen des Fluides durch den Hauptteil in die Umgebung zu unterbinden, ist ein Ringkörper mit mehreren Ringdichtungen zwischen der Spindel und dem Hauptteil vorgesehen, dessen Dichtigkeit unabhängig von einer rotatorischen oder axialen Bewegung der Spindel erhalten bleibt.

Bei der vorbeschriebenen Anbohrarmatur hat sich die sichere Befestigung der Spindel sowie deren einfache Entnahme nach der Abzweigung des Fluides als schwierig erwiesen. Aus diesem Grunde schlägt die EP 0 754 900 B1 einen rohrförmigen Schaft an Stelle der Spindel vor, wobei der Schaft lösbar an der Schneideinrichtung befestigt ist. Um hier die Drehung der Schneideinrichtung zu erreichen, wird das Drehwerkzeug durch den rohrförmigen Schaft bis zu einer Vertiefung zum Eingreifen des Drehwerkzeuges geführt, wie dies bereits aus der US 4,063,844 bekannt war. Zwischen dem Schaft und dem Hauptteil sind, wie bereits unter Bezugnahme auf die EP 0 572 817 B1 beschrieben, Dichtungen vorgesehen, die unabhängig von einer axialen Bewegung des Schaftes eine Abdichtung des Hauptteiles bewirken.

Die aus den Druckschriften EP 0572 817 B1 und EP 0 754 900 B1 bekannten Vorrichtungen bewirken zwar eine sichere Abdichtung des Hauptteiles, so dass kein Fluid an die Umgebung gelangen kann, allerdings gehen damit auch Nachteile einher. Wenn beispielsweise eine fest mit der Schneideinrichtung verbundene Spindel vorgesehen ist (EP 0 572 817 B1), so ergibt sich zwangsläufig, dass die Abmessungen der Vorrichtung im Gebrauchszustand stark vergrößert sind, da die Spindel nach außen hervorsteht. Ist ein Schaft vorgesehen, der Lösbar an der Schneideinrichtung befestigt ist (EP 0 754 900 B1), so ist die Handhabung der Vorrichtung erschwert, da der Schaft zuerst angebracht und anschließend wieder entfernt werden muß.

Die DE-A-196 41 803 beschreibt eine Anbohrarmatur, bei der das drehbetätigbare Schneidwerkzeug in eine Zwischenhülse geschraubt ist, die ihrerseits in den Hauptstutzen geschraubt ist. Beim Drehen des Schneidwerkzeugs ist die Zwischenhülse zwischen einer die Mündung des Abzweigstutzens freigebenden Einfahrposition und einer diese Mündung verschließenden Ausfahrposition verschraubbar. Nachteilig ist, dass die Herstellung und Montage der aus Schneidwerkzeug und Zwischenhülse bestehenden Konstruktion relativ aufwendig ist.

Aus der EP 0 736 718 A1 ist eine Anbohrarmatur bekannt, bei der die Schneidbuchse ein Außengewinde und das Gehäusehauptteil ein Innengewinde aufweist, wobei beide Teile miteinander verschraubt sind. Die Betätigung des Schneidwerkzeugs erfolgt über eine drehbar in dem Hauptteil gelagerte Spindel. Nachteilig ist, dass die Anbohrarmatur mit der Spindelkonstruktion eine relativ große axiale Länge aufweist.

Der vorliegenden Erfindung liegt die Aufgabe zugrunde, eine einfach herzustellende und zu montierende Vorrichtung zum Anzapfen einer ein strömendes Fluid führenden Leitung zu schaffen, die einen kompakten Aufbau hat und deren Handhabung vereinfacht ist.

Die erfindungsgemäße Vorrichtung dient dem Anzapfen einer Leitung, vorzugsweise von Kunststoffrohren, die strömendes Fluid führt, wobei unter einem Fluid sowohl Gase als auch Flüssigkeiten zu verstehen sind. Die Vorrichtung weist ein Gehäuse auf, das im wesentlichen aus einem Hauptteil, einem mit dem Hauptteil fluchtenden Befestigungsteil zur Befestigung an der Leitung und einem Auslaßteil zum Abführen von Fluid aus der angezapften Leitung besteht. Innerhalb des Hauptteiles ist eine drehbare Schneideinrichtung angeordnet, die ein Außengewinde und eine dem Befestigungsteil zugewandte zylindrische Schneidklinge aufweist. Das Außengewinde der Schneideinrichtung ist in ein Innengewinde in dem Hauptteil geschraubt, so dass die Schneideinrichtung von einer zurückgezogenen ersten Position in eine ausgefahrene zweite Position gedreht werden kann. In der zweiten Position ist die Schneideinrichtung derart weit in Richtung des Befestigungsteiles bewegt, dass die Schneidklinge ein Wandstück aus der Leitung herausgeschnitten hat. An der dem Befestigungsteil abgewandten Seite der Schneideinrichtung ist ein Schaft befestigt, der sich innerhalb des Hauptteiles erstreckt. Erfindungsgemäß ist der Schaft als Teleskopschaft mit mindestens zwei dichtend und gleitend gegeneinander verschiebbaren Segmenten ausgebildet. Der Teleskopschaft kann demzufolge in axialer Richtung verlängert oder gekürzt werden, wobei die Dichtung zwischen den Segmenten mittels herkömmlichen Dichtungen erzielt werden kann, wie z.B. durch einen Dichtring. Der Teleskopschaft ist ferner mit einem der Schneideinrichtung abgewandten Abschnitt dichtend an dem Hauptteil befestigt, wobei die Dichtung auch in diesem Fall beispielsweise mittels herkömmlicher Dichtringe erzielt werden kann.

Indem der Schaft einerseits an dem Hauptteil befestigt und andererseits als Teleskopschaft ausgebildet ist, kann dieser dauerhaft innerhalb der Vorrichtung verbleiben, d.h. das Einsetzen und Entnehmen des Schaftes entfällt, wodurch die Handhabung erleichtert ist. Gleichzeitig steht der Teleskopschaft aufgrund seiner axialen Verlängerbarkeit bzw. Verkürzbarkeit zu keinem Zeitpunkt aus dem Hauptteil hervor, so daß die Vorrichtung einen sehr kompakten Aufbau hat.

In einer bevorzugten Ausführungsform der erfindungsgemäßen Vorrichtung sind die Segmente im wesentlichen hülsenförmig ausgebildet und können ineinander geschoben werden.

Um den Zusammenhalt der hülsenförmigen Segmente zu gewährleisten, weisen diese in einer weiteren bevorzugten Ausführungsform der Erfindung einen endseitigen, radial nach außen weisenden umlaufenden Ansatz auf, der von einem anderen Segment hintergriffen werden kann. Der nach außen weisende umlaufende Ansatz dient somit als Anschlagelement, so daß die Segmente nicht über ein bestimmtes Maß hinaus in axialer Richtung verschoben werden können, wodurch die Dichtigkeit zwischen den Segmenten erhalten bleibt.

In einer weiteren bevorzugten Ausführungsform der erfindungsgemäßen Vorrichtung weist mindestens ein hülsenförmiges Segment einen endseitigen, hintergreifbaren, radial nach innen weisenden umlaufenden Ansatz auf. Der nach außen weisende umlaufende Ansatz eines anderen Segmentes kann von dem radial nach innen weisenden umlaufenden Ansatz hintergriffen werden. Haben zwei derart miteinander verbundene Segmente die maximale Verschiebung zueinander erreicht, so schlagen der nach außen weisende Ansatz und der nach innen weisende Ansatz aneinander an und verhindern ein weiteres Verschieben.

Eine einfache und kostengünstige Abdichtung zwischen den Segmenten wird in einer besonders bevorzugten Ausführungsform der Erfindung dadurch erzielt, daß in dem radial nach außen oder dem radial nach innen weisenden umlaufenden Ansatz eine umlaufende Nut vorgesehen ist, in die ein Dichtring eingesetzt ist.

In einer besonders bevorzugten Ausführungsform der erfindungsgemäßen Vorrichtung weist mindestens ein hülsenförmiges Segment endseitige, umfangsmäßig verteilte Längsschlitze auf, die den nach innen oder nach außen weisenden umlaufenden Ansatz unterteilen. Die Längsschlitze ermöglichen, daß die Wandbereiche zwischen den Längsschlitzen leichter radial nach außen bzw. innen gedrückt werden können, so daß das Zusammensetzen der hülsenförmigen Segmente, insbesondere das Aneinandervorbeiführen der umlaufenden Ansätze, erleichtert ist.

Um die Verbindung zwischen dem Teleskopschaft und der Schneideinrichtung sicherer zu gestalten, ist das an der Schneideinrichtung befestigte Segment in einer besonders bevorzugten Ausführungsform der Erfindung einstückig mit der Schneideinrichtung ausgebildet.

In einer weiteren vorteilhaften Ausführungsform der Vorrichtung weist der Teleskopschaft ein Außengewinde auf, mittels dessen der Teleskopschaft an dem Hauptteil festgeschraubt ist. Die Schraubbefestigung stellt eine besonders einfache und sichere Möglichkeit der Verbindung zwischen dem Hauptteil und dem Teleskopschaft dar.

Um zu verhindern, daß die Schraubbefestigung zwischen Teleskopschaft und Hauptteil durch das Drehen der Schneideinrichtung ebenfalls gelöst wird, weist der Teleskopschaft in einer bevorzugten Ausführungsform mindestens ein Rastelement auf, das bei vollständig eingeschraubtem Teleskopschaft einrastet, so daß der Teleskopschaft nicht mehr herausgeschraubt werden kann. An dem Hauptteil kann zu diesem Zweck beispielsweise eine Vertiefung vorgesehen sein, in die das Rastelement einrastet. Ein Herausschrauben wäre lediglich dann möglich, wenn das Rastelement zerstört würde. Das Rastelement sollte demzufolge entsprechend fest ausgelegt sein.

In einer weiteren vorteilhaften Ausführungsform der erfindungsgemäßen Vorrichtung ist an der dem Teleskopschaft zugewandten Seite der Schneideinrichtung eine Aufnahmeeinrichtung für ein Drehwerkzeug vorgesehen, wobei das Drehwerkzeug in den Teleskopschaft eingeführt werden kann. Unter der Aufnahmeeinrichtung kann beispielsweise eine Vertiefung verstanden werden, in die ein Schraubendreher oder ein Imbusschlüssel bzw. Sechskantschlüssel passend einsetzbar ist.

Um Schneidklingen unterschiedlichen Durchmessers bei derselben Vorrichtung verwenden zu können, setzt sich die Schneideinrichtung aus einem das Außengewinde aufweisenden Teil und der Schneidklinge selbst zusammen, wobei die Schneidklinge ausgewechselt werden kann.

In einer besonders bevorzugten Ausführungsform der Erfindung ist die Schneidklinge in dem das Außengewinde aufweisenden Teil festgeschraubt.

Im folgenden wird die Erfindung anhand eines Ausführungsbeispieles unter Bezugnahme auf die beigefügten Figuren eingehender erläutert.

Es zeigen:
- Fig. 1: eine Seitenansicht der erfindungsgemäßen Vorrichtung in geschnittener Darstellung,
- Fig. 2: eine Seitenansicht des Teleskopschaftes und der Schneideinrichtung von Fig. 1 in vergrößerter und geschnittener Darstellung,
- Fig. 3: eine Seitenansicht des ersten Segmentes von Fig. 1 bzw. 2 in teilweise geschnittener Darstellung,
- Fig. 4: eine Seitenansicht des zweiten Segmentes von Fig. 1 bzw. 2 in teilweise geschnittener Darstellung,
- Fig. 5: eine Seitenansicht des dritten Segmentes und der Schneideinrichtung von Fig. 1 bzw. 2 in teilweise geschnittener Darstellung,
- Fig. 6: den Ausschnitt A von Fig. 3 in vergrößerter Darstellung,
- Fig. 7: eine Draufsicht auf das erste Segment in Richtung des Pfeiles B in Fig. 3,
- Fig. 8: den Ausschnitt C von Fig. 4 und 5 in vergrößerter Darstellung und
- Fig. 9: den Ausschnitt D von Fig. 3 und 4 in vergrößerter Darstellung.

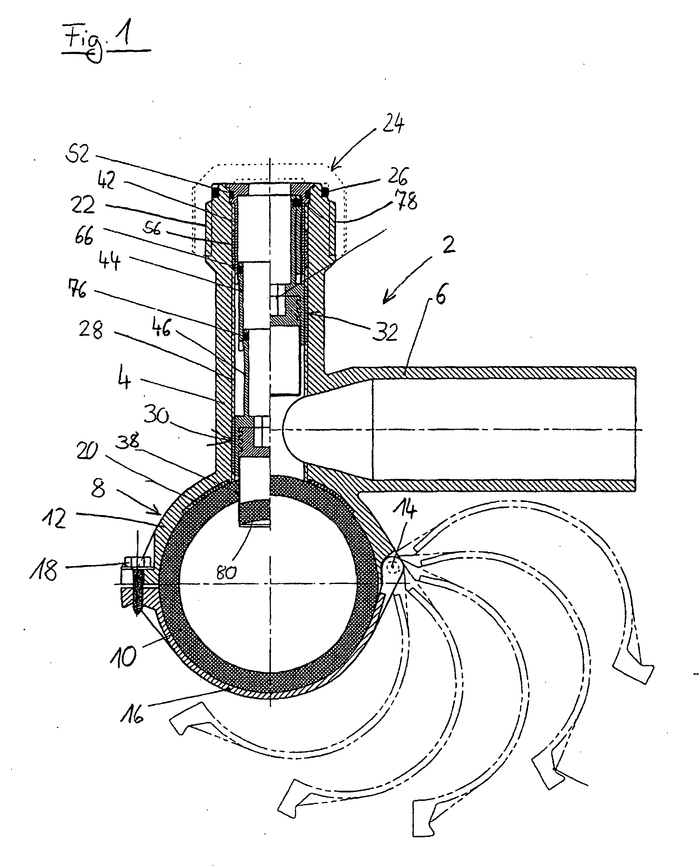

Die in Fig. 1 dargestellte Ausführungsform der erfindungsgemäßen Vorrichtung weist ein im wesentlichen T-förmiges Gehäuse 2 auf. Das Gehäuse 2 umfaßt einen rohrförmigen Hauptteil 4, in den ein rohrförmiges Auslaßteil 6 mündet. Mit dem Hauptteil 4 in axialer Richtung fluchtend ist ein Befestigungsteil 8 vorgesehen, das der Befestigung der Vorrichtung an einer Leitung 10 dient, die im vorliegenden Beispiel von einem Kunststoffrohr gebildet wird.

Der Befestigungsteil 8 ist in der Art einer Schelle ausgebildet, d. h. er setzt sich aus einem auf die Leitung 10 aufsetzbaren ersten kreisbogenförmigen Teil 12 und einem an dem ersten Teil 12 um eine Achse 14 schwenkbar angeordneten zweiten kreisbogenförmigen Teil 16 zusammen, wobei die Verschwenkbarkeit anhand der gestrichelten Darstellung des zweiten kreisbogenförmigen Teiles 16 dargestellt ist. Um die Vorrichtung an der Leitung 10 zu befestigen wird der erste Teil 12 auf die Leitung 10 aufgesetzt, um den zweiten Teil 16 im Anschluß daran in eine die Leitung 10 umschließende Position zu verschwenken. In dieser Position werden die beiden Teile 12, 16 mittels einer Schraube 18 miteinander verspannt, so daß die Leitung 10 eng und fest umschlossen ist. Innerhalb des Befestigungsteiles 8 bzw. in dem ersten kreisbogenförmigen Teil 12 auf der der Leitung 10 zugewandten Seite verlaufen Heizdrähte 20, durch die ein elektrischer Strom fließen kann. Bei Stromfluß durch die Heizdrähte 20 kommt es in diesem Bereich zu einer Elektrofusion zwischen dem Material des Befestigungsteiles 8 und der Leitung 10, wobei das Material des Befestigungsteiles 8 vorzugsweise ebenfalls Kunststoff ist. Die Heizdrähte 20 umgeben die dem Befestigungsteil 8 zugewandte Öffnung des Hauptteiles 4 vorzugsweise ringförmig, so daß eine hohe Dichtigkeit um die spätere Anzapföffnung gewährleistet ist.

Der Hauptteil 4 weist in einem distalen, d. h. dem Befestigungsteil 8 abgewandten Abschnitt ein Außengewinde 22auf, auf das eine Verschlußkappe 24 aufschraubbar ist, die in Fig. 1 lediglich gestrichelt dargestellt ist. Zwischen dem Hauptteil 4 und der Verschlußkappe 24 ist ferner eine Ringdichtung 26 vorgesehen, so daß das Hauptteil 4 dicht verschlossen ist, wobei die Verschlußkappe 24 lediglich als Sicherheitseinrichtung dient, falls die weiter hinten beschriebene Abdichtung versagen sollte. Der Hauptteil 4 weist ferner ein Innengewinde 28 auf, das sich bei der vorliegenden Ausführungsform durch den gesamten Hauptteil 4 erstreckt.

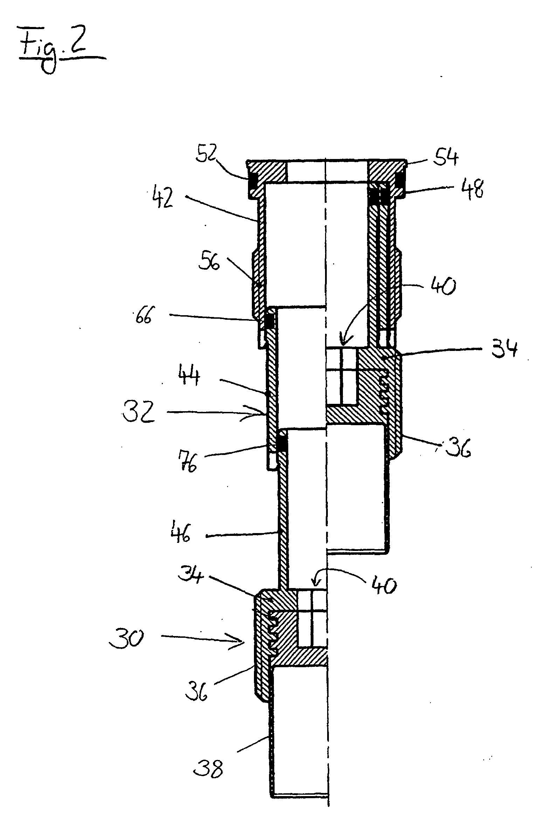

In dem Hauptteil 4 ist eine Schneideinrichtung 30 und ein Teleskopschaft 32 angeordnet, die im folgenden unter Bezugnahme auf die Fig. 2 bis 9 eingehender beschrieben werden.

In Fig. 2 ist die Schneideinrichtung 30 und der Teleskopschaft 32 von Fig. 1 dargestellt, wobei die rechte Hälfte von Fig. 2 die Schneideinrichtung 30 in einer zurückgezogenen ersten Position und die linke Hälfte von Fig. 2 die Schneideinrichtung 30 in einer ausgefahrenen zweiten Position mit ausgefahrenem Teleskopschaft 32 zeigt. Die Schneideinrichtung 30 weist einen Teil 34 auf, der mit einem Außengewinde 36 versehen ist, mittels dessen die Schneideinrichtung 30 in das Innengewinde 28 des Hauptteiles 4 (Fig. 1) geschraubt werden kann. An dem Teil 34 ist eine zylindrische Schneidklinge 38 befestigt, die dem Befestigungsteil 8 (Fig. 1) zugewandt ist. Der Teil 34 und die Schneidklinge 38 sind miteinander verschraubt, so daß die Schneidklinge 38 auswechselbar ist, oder die Schneidklinge 38 ist in den Teil 34 eingegossen, wobei die Schneidklinge 38 aus einem härteren Material als Kunststoff, wie beispielsweise Messing, gefertigt ist, und der Teil 34 aus Kunststoff besteht. Auf ihrer dem Teleskopschaft 32 zugewandten Seite weist die Schneideinrichtung 30 eine Aufnahmeeinrichtung 40 für ein Drehwerkzeug (nicht dargestellt) auf, die bei der vorliegenden Ausführungsform als Vertiefung mit sechseckigem Querschnitt zur Aufnahme eines Sechskantschlüssels ausgebildet ist. Die Vertiefung erstreckt sich durch den Teil 34 bis in einen distalen Abschnitt der Schneidklinge 38. Dies ist von Vorteil, da sich das Material der Schneidklinge 38 bei der Belastung durch den Einsatz des Drehwerkzeuges nicht so leicht verformt wie der Kunststoff des Teiles 34.

Der Teleskopschaft 32 setzt sich bei der vorliegenden Ausführungsform aus einem hülsenförmigen ersten Segment 42, einem hülsenförmigen zweiten Segment 44 und einem hülsenförmigen dritten Segment 46 zusammen, die gegeneinander verschoben werden können, d. h. das dritte Segment 46 ist innerhalb des zweiten Segmentes 44 axial geführt und das zweite Segment 44 ist innerhalb des ersten Segmentes axial geführt, so daß die Segmente 46 und 44 bzw. 44 und 42 ineinander geschoben werden können.

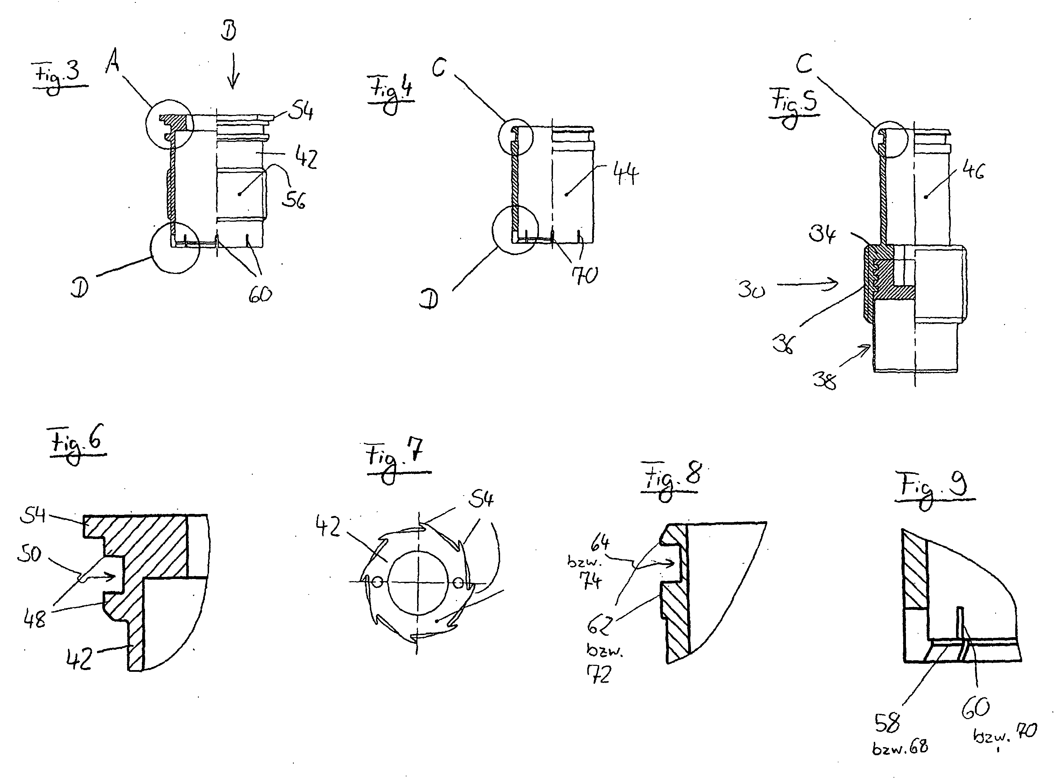

Das erste Segment 42, das in den Fig. 3, 6, 7 und 9 detaillierter dargestellt ist, weist in einem dem zweiten Segment 44 abgewandten Abschnitt einen radial nach außen weisenden umlaufenden Ansatz 48 auf. In dem Ansatz 48 ist eine umlaufende Nut 50 vorgesehen (Fig. 6), in die ein Dichtring 52 eingesetzt ist (Fig. 2). Wie insbesondere aus Fig. 7 ersichtlich, die eine Draufsicht auf das erste Segment 42 in Richtung des Pfeiles B von Fig. 3 zeigt, sind an dem Ansatz ferner nach außen weisende Rastelemente 54 vorgesehen. Das erste Segment 42 weist ferner ein Außengewinde 56 auf, so daß das erste Segment 42 in das Innengewinde 28 des Hauptteiles 4 (Fig. 1) geschraubt werden kann. An seinem dem zweiten Segment 44 zugewandten Ende weist das erste Segment 42 einen radial nach innen weisenden umlaufenden Ansatz 58 auf (Fig. 9). Ferner sind an diesem Ende umfangsmäßig verteilte Längsschlitze 60 vorgesehen, die den nach innen weisenden Ansatz 58 in einzelne Abschnitte unterteilen. Der nach innen weisende Ansatz 58 ist an seiner dem zweiten Segment 44 zugewandten Seite angefast bzw. angeschrägt, so daß das Einführen des zweiten Segmentes 44 in das erste Segment 42 während des Zusammenbaus der Vorrichtung vereinfacht ist. Darüber hinaus vereinfachen die Längsschlitze 60 das Einführen des zweiten Segmentes 44 in das erste Segment 42, da die Bereiche zwischen den Längsschlitzen 60 einfacher nach außen gedrückt werden können.

Das zweite Segment 44, das in den Fig. 4, 8 und 9 detaillierter dargestellt ist, weist in einem dem ersten Segment 42 zugewandten Abschnitt einen radial nach außen weisenden umlaufenden Ansatz 62 auf. In dem Ansatz 62 ist eine umlaufende Nut 64 vorgesehen (Fig. 8), in die ein Dichtring 66 eingesetzt ist (Fig. 2). Der radial nach außen weisende Ansatz 62 ist an seiner dem ersten Segment 42 zugewandten Seite angefast bzw. angeschrägt, so daß das Einführen des zweiten Segmentes 44 in das erste Segment 42 während des Zusammenbaus der Vorrichtung vereinfacht ist. An seinem dem dritten Segment 46 zugewandten Ende weist das zweite Segment 44 in Analogie zu dem ersten Segment 42 einen radial nach innen weisenden Ansatz 68 sowie Längsschlitze 70 auf (Fig. 9), wobei hier auf die obenstehende Beschreibung verwiesen sein soll.

Der nach innen weisende Ansatz 58 des ersten Segmentes 42 und der nach außen weisende Ansatz 62 des zweiten Segmentes 44 hintergreifen sich im zusammengesetzten Zustand, so daß diese aneinander anschlagen, bevor das zweite Segment 44 aus dem ersten Segment 42 herausgleiten kann, wie dies in Fig. 2, linke Hälfte, dargestellt ist. Der Dichtring 66 verhindert ein Eindringen des Fluides in den Teleskopschaft 32.

Das dritte Segment 46, das in den Fig. 5 und 8 detaillierter dargestellt ist, weist in einem dem zweiten Segment 44 zugewandten Abschnitt in Analogie zu dem zweiten Segment 44 einen radial nach außen weisenden Ansatz 72 und eine umlaufende Nut 74 auf, wobei in die Nut 74 ein Dichtring 66 eingesetzt ist (Fig. 2). Bezüglich der Ausbildung des nach außen weisenden Ansatzes 72 sowie der Nut 74 wird auf die Beschreibung des zweiten Segmentes 44 verwiesen. Das dritte Segment 46 ist an der Schneideinrichtung 30 befestigt, wobei das dritte Segment 36 einstückig mit den Teil 34 der Schneideinrichtung 30 ausgebildet ist, so daß eine sehr feste Verbindung besteht und keine weitere Abdichtung im Bereich der --Verbindungsstelle notwendig ist (Fig. 5).

Wie schon unter Bezugnahme auf das erste und zweite Segment 42, 44 beschrieben, hintergreifen sich der nach innen weisende Ansatz 68 des zweiten Segmentes 44 und der nach außen weisende Ansatz 72 des dritten Segmentes 46 im zusammengesetzten Zustand, so daß diese aneinander anschlagen, bevor das dritte Segment 46 aus dem zweiten Segment 44 herausgleiten kann, wie dies in Fig. 2, linke Hälfte, dargestellt ist. Der Dichtring 76 verhindert wiederum ein Eindringen des Fluides in den Teleskopschaft 32.

Um den Teleskopschaft 32 an dem Hauptteil 4 zu befestigen, wird das Außengewinde 56 an dem ersten Segment 42 in das Innengewinde 28 innerhalb des Hauptteiles 4 geschraubt, nachdem die Schneideinrichtung 30 in das Innengewinde 28 geschraubt wurde. Das Einschrauben wird so lange durchgeführt bis der nach außen weisende Ansatz 48 stirnseitig auf einer Schulter 78 innerhalb des Hauptteiles 4 aufliegt. In dieser Position rasten die Rastelemente 54 (Fig. 7) in entsprechende Ausnehmungen (nicht dargestellt) in dem Hauptteil 4 ein, so daß ein Herausdrehen des ersten Segmentes 42 nicht mehr möglich und der Teleskopschaft 32 somit sicher an dem Hauptteil 4 befestigt ist. Der Dichtring 52 zwischen dem Hauptteil 4 und dem ersten Segment 42 bewirkt, das keinerlei Fluid zwischen den beiden Teilen hindurch nach außen entweichen kann.

Bezugnehmend auf Fig. 1 wird im folgenden die Funktionsweise der erfindungsgemäßen Vorrichtung beschrieben. Nachdem der Befestigungsteil 8 wie eingangs beschrieben an der Leitung 10 befestigt und über die Heizdrähte 20 mit dieser verschweißt wurde, befindet sich die Schneideinrichtung 30 in einer in der rechten Hälfte von Fig. 1 dargestellten zurückgezogenen ersten Position. In der ersten Position ist der Teleskopschaft 32 verkürzt, da die Segmente 42, 44, 46 ineinandergeschoben sind. Um die Leitung 10 anzuzapfen muß ein Drehwerkzeug, in diesem Fall ein Sechskanttschlüssel, durch die hülsenförmigen Segmente 42, 44, 46, die von außen zugänglich sind, bis in die Aufnahmeeinrichtung 40 in Form der Vertiefung geschoben werden. Durch Drehen des Drehwerkzeuges wird die Schneideinrichtung 30 rotiert. Aufgrund der Anordnung der Schneideinrichtung 30 in dem Innengewinde 28 wird diese translatorisch in Richtung der Leitung 10 bewegt. Sobald die Schneidklinge 38 der Schneideinrichtung 30 an die Wand der Leitung 10 angrenzt, bewirkt die weitere Dreh- und Vorschubbewegung der Schneideinrichtung 30 ein Einschneiden der Schneidklinge 38 in die Wand der Leitung 10. Der Schneidvorgang wird so lange durchgeführt bis die Schneidklinge 30 die Wand der Leitung 10 komplett durchbohrt hat und die Schneideinrichtung 30 somit in einer ausgefahrenen zweiten Position ist, die in der linken Hälfte von Fig. 1 zu sehen ist. Das aus der Leitung herausgeschnittene Wandstück 80 ist in der zylindrischen Schneidklinge 38 aufgenommen. Im Anschluß daran wird die Schneideinrichtung 30 durch entgegengesetzte Drehung des Drehwerkzeuges wieder in die erste Position zurückbewegt, wobei das herausgeschnittene Wandstück 80 in der Schneidklinge verbleibt.

Das in der Leitung 10 strömende Fluid kann nun zumindest teilweise über die entstandene Öffnung in das Auslaßteil 6 der Vorrichtung strömen, wobei die Dichtringe 52, 66 und 76 ein Austreten des Fluides an die Umgebung sicher verhindern.

## Patentansprüche

1. Vorrichtung zum Anzapfen einer strömendes Fluid führenden Leitung (10) mit
einem Gehäuse (2), das einen Hauptteil (4), einen mit dem Hauptteil (4) fluchtenden Befestigungsteil (8) zur Befestigung an der Leitung (10) und einen Auslaßteil (6) zum Abführen von Fluid aus der angezapften Leitung (10) aufweist,
einer innerhalb des Hauptteils (4) angeordneten drehbaren Schneideinrichtung (30), die ein Außengewinde (36) und eine dem Befestigungsteil (8) zugewandte zylindrische Schneidklinge (38) aufweist, wobei die Schneideinrichtung (30) von einer zurückgezogenen ersten Position in eine ausgefahrene zweite Position drehbar ist, in der ein Wandstück (80) aus der Leitung (10) herausgeschnitten ist, und
einem innerhalb des Hauptteiles (4) angeordneten Schaft, der an der dem Befestigungsteil (8) abgewandten Seite der Schneideinrichtung (30) befestigt ist,
**dadurch gekennzeichnet, dass** der Schaft als Teleskopschaft (32) mit mindestens zwei dichtend und gleitend gegeneinander verschiebbaren Segmenten (32, 44, 46) ausgebildet ist, der mit einem der Schneideinrichtung (3) abgewandten Abschnitt dichtend an dem Hauptteil (4) befestigt ist, wobei das Außengewinde (36) der Schneideinrichtung (30) in ein Innengewinde (28) in dem Hauptteil (4) geschraubt ist.

2. Vorrichtung nach Anspruch 1, **dadurch gekennzeichnet, dass** die Segmente (42, 44, 46) im wesentlichen hülsenförmig ausgebildet und ineinanderschiebbar sind.

3. Vorrichtung nach Anspruch 2, **dadurch gekennzeichnet, dass** mindestens ein hülsenförmiges Segment (42, 44, 46) einen endseitigen, hintergreifbaren, radial nach außen weisenden umlaufenden Ansatz (48, 62, 72) aufweist.

4. Vorrichtung nach Anspruch 3, **dadurch gekennzeichnet, daß** mindestens ein hülsenförmiges Segment (42, 44) einen endseitigen, hintergreifbaren, radial nach innen weisenden umlaufenden Ansatz (58, 68) aufweist, mittels dessen der nach außen weisende umlaufende Ansatz (62, 72) eines anderen Segmentes (44, 46) hintergreifbar ist.

5. Vorrichtung nach einem der Ansprüche 3 oder 4, **dadurch gekennzeichnet, daß** in dem radial nach außen oder dem radial nach innen weisenden umlaufenden Ansatz (48, 62, 72) eine umlaufende Nut (50, 64, 74) vorgesehen ist, in die ein Dichtring (52, 66, 76) eingesetzt ist.

6. Vorrichtung nach einem der Ansprüche 3 bis 5, **dadurch gekennzeichnet, daß** mindestens ein hülsenförmiges Segment (42, 44) endseitig, umfangsmäßig verteilte Längsschlitze (60, 70) aufweist, die den nach innen oder nach außen weisenden umlaufenden Ansatz (58, 68) unterteilen.

7. Vorrichtung nach einem der vorangehenden Ansprüche, **dadurch gekennzeichnet, daß** das an der Schneideinrichtung (30) befestigte Segment (46) einstückig mit der Schneideinrichtung (30) ausgebildet ist.

8. Vorrichtung nach einem der vorangehenden Ansprüche, **dadurch gekennzeichnet, daß** der Teleskopschaft (32) ein Außengewinde (56) aufweist, mittels dessen der Teleskopschaft (32) an dem Hauptteil (4) festgeschraubt ist.

9. Vorrichtung nach Anspruch 8, **dadurch gekennzeichnet, daß** der Teleskopschaft (32) mindestens ein Rastelement (54) aufweist, das bei vollständig eingeschraubtem Teleskopschaft (32) einrastet, so daß der Teleskopschaft (32) nicht mehr herausschraubbar ist.

10. Vorrichtung nach einem der vorangehenden Ansprüche, **dadurch gekennzeichnet, daß** an der dem Teleskopschaft (32) zugewandten Seite der Schneideinrichtung (30) eine Aufnahmeeinrichtung (40) für ein Drehwerkzeug vorgesehen ist, wobei das Drehwerkzeug in den Teleskopschaft (32) einführbar ist.

11. Vorrichtung nach einem der vorangehenden Ansprüche, **dadurch gekennzeichnet, daß** sich die Schneideinrichtung (30) aus einem das Außengewinde (36) aufweisenden Teil (34) und der Schneidklinge (38) zusammensetzt, wobei die Schneidklinge (38) auswechselbar ist

12. Vorrichtung nach Anspruch 11, **dadurch gekennzeichnet, daß** die Schneidklinge (38) in dem das Außengewinde (36) aufweisenden Teil (34) festgeschraubt oder angespritzt ist.

## Claims

1. Apparatus for tapping a conduit (10) conducting a flowing fluid, having
a housing (2), which has a main part (4), a fastening part (8), aligned with the main part (4), for fastening to the conduit (10), and an outlet part (6) for carrying fluid away from the tapped conduit (10),
a rotatable cutting device (30), which is arranged inside the main part (4) and has an external thread (36) and a cylindrical cutting blade (38) facing the fastening part (8), the cutting device (30) being rotatable from a retracted first position into an extended second position, in which a wall piece (80) is cut out of the conduit (10), and
a shaft, which is arranged inside the main part (4) and fastened to the side of the cutting device (30) facing away from the fastening part (8),
**characterised in that** the shaft is designed as a telescopic shaft (32), which has at least two segments (32, 44, 46) displaceable in a sealed and sliding manner relative to one another and is fastened in a sealed manner to the main part (4) by a portion facing away from the cutting device (30), the external thread (36) of the cutting device (30) being screwed into an internal thread (28) in the main part (4).

2. Apparatus according to Claim 1, **characterised in that** the segments (42, 44, 46) are of substantially sleeve-shaped design and can slide in one another.

3. Apparatus according to Claim 2, **characterised in that** at least one-sleeve shaped segment (42, 44, 46) has an end-side, engage-behind, radially outward-pointing peripheral projection (48, 62, 72).

4. Apparatus according to Claim 3, **characterised in that** at least one sleeve-shaped segment (42, 44) has an end-side, engage-behind, radially inward-pointing peripheral projection (58, 68), which can engage behind the outward-pointing peripheral projection (62, 72) of another segment (44, 46).

5. Apparatus according to one of Claims 3 and 4, **characterised in that** a peripheral groove (50, 64, 74), into which a sealing ring (52, 66, 76) is inserted, is provided in the radially outward-pointing or the radially inward-pointing peripheral projection (48, 62, 72).

6. Apparatus according to one of Claims 3 to 5, **characterised in that** at least one sleeve-shaped segment (42, 44) has, at the end side, circumferentially distributed longitudinal slits (60, 70) which subdivide the inward- or outward-pointing peripheral projection (58, 68).

7. Apparatus according to one of the preceding claims, **characterised in that** the segment (46) fastened to the cutting device (30) is designed in one piece with the cutting device (30).

8. Apparatus according to one of the preceding claims, **characterised in that** the telescopic shaft (32) has an external thread (56), by means of which the telescopic shaft (32) is tightly screwed to the main part (4).

9. Apparatus according to Claim 8, **characterised in that** the telescopic shaft (32) has at least one catch element (54), which catches when the telescopic shaft (32) is screwed in fully, so that the telescopic shaft (32) can no longer be unscrewed.

10. Apparatus according to one of the preceding claims, **characterised in that** a receiving device (40) for a turning tool is provided on the side of the cutting device (30) facing the telescopic shaft (32), the turning tool being insertable into the telescopic shaft (32).

11. Apparatus according to one of the preceding claims, **characterised in that** the cutting device (30) is composed of a part (34) having the external thread (36) and of the cutting blade (38), the cutting blade (38) being interchangeable.

12. Apparatus according to Claim 11, **characterised in that** the cutting blade (38) is tightly screwed into or integrally moulded on the part (34) having the external thread (36).

## Revendications

1. Dispositif pour le raccordement par emboîtement d'un conduit (10) guidant un fluide qui s'écoule, comprenant
un logement (2) qui présente une partie principale (4), une partie de fixation (8) disposée à fleur avec la partie principale (4), à des fins de fixation au conduit (10), et une partie de sortie (6) pour l'évacuation du fluide du conduit (10) raccordé par emboîtement ;
un mécanisme de coupe rotatif (30) disposé à l'intérieur de la partie principale (4), qui présente un filet de vis externe (36) et une lame tranchante cylindrique (38) tournée vers la partie de fixation (8), le mécanisme de coupe (30) étant à même de passer, par rotation, d'une première position rétractée à une deuxième position sortie dans laquelle un morceau de paroi (80) est découpé du conduit (10), et
un arbre disposé à l'intérieur de la partie principale (4), qui est fixé sur le côté du mécanisme de coupe (30) qui se détourne de la partie de fixation (8) ;
**caractérisé en ce que** l'arbre est réalisé sous la forme d'un arbre télescopique (32) comprenant au moins deux segments (32, 44, 46) aptes à se déplacer les uns par rapport aux autres de manière étanche et par coulissement, qui est fixé avec une section se détournant du mécanisme de coupe (3) de manière étanche contre la partie principale (4), le filet de vis externe (36) du mécanisme de coupe (30) étant vissé dans un filet de vis interne (28) pratiqué dans la partie principale (4).

2. Dispositif selon la revendication 1, **caractérisé en ce que** les segments (42, 44, 46) sont réalisés essentiellement en forme de manchons et sont en mesure de coulisser les uns dans les autres.

3. Dispositif selon la revendication 2, **caractérisé en ce qu'**au moins un segment en forme de manchon (42, 44, 46) présente une pièce rapportée périphérique terminale (48, 62, 72), apte à être saisie par l'arrière, orientée vers l'extérieur en direction radiale.

4. Dispositif selon la revendication 3, **caractérisé en ce qu'**au moins un segment en forme de manchon (42, 44) présente une pièce rapportée périphérique terminale (58, 68), apte à être saisie par l'arrière, orientée vers l'intérieur en direction radiale, à l'aide de laquelle la pièce rapportée périphérique (62, 72) orientée vers l'extérieur, d'un autre segment (44, 46) peut être saisie par l'arrière.

5. Dispositif selon la revendication 3 ou 4, **caractérisé en ce qu'**on prévoit, dans la pièce rapportée périphérique (46, 62, 72) orientée vers l'extérieur en direction radiale ou orientée vers l'intérieur en direction radiale, une rainure périphérique (50, 64, 74) dans laquelle est inséré un anneau d'étanchéité (52, 66, 76).

6. Dispositif selon l'une quelconque des revendications 3 à 5, **caractérisé en ce qu'**au moins un segment (42, 44) en forme de manchon présente des fentes longitudinales terminales (60, 70) réparties sur la périphérie qui subdivisent la pièce rapportée périphérique (58, 68) orientée vers l'intérieur ou vers l'extérieur.

7. Dispositif selon l'une quelconque des revendications précédentes, **caractérisé en ce que** le segment (46) fixé au mécanisme de coupe (30) est réalisé en une seule pièce avec le mécanisme de coupe (30).

8. Dispositif selon l'une quelconque des revendications précédentes, **caractérisé en ce que** l'arbre télescopique (32) présente un filet de vis externe (56) à l'aide duquel l'arbre télescopique (32) est fermement vissé à la partie principale (4).

9. Dispositif selon la revendication 8, **caractérisé en ce que** l'arbre télescopique (32) présente au moins un élément d'encliquetage (54) qui est encliqueté lorsque l'arbre télescopique (32) est complètement inséré par vissage, de telle sorte que l'arbre télescopique (32) ne peut plus se dévisser.

10. Dispositif selon l'une quelconque des revendications précédentes, **caractérisé en ce qu'**on prévoit, sur le côté du mécanisme de coupe (30) tourné vers l'arbre télescopique (32), un mécanisme de réception (40) pour un outil rotatif, l'outil rotatif étant à même de venir s'insérer dans l'arbre télescopique (32).

11. Dispositif selon l'une quelconque des revendications précédentes, **caractérisé en ce que** le mécanisme de coupe (30) est composé d'une partie (34) présentant un filet de vis externe et de la lame tranchante (38), la lame tranchante (38) pouvant être échangée.

12. Dispositif selon revendication 11, **caractérisé en ce que** la lame tranchante (38) est serrée par vissage dans ou appliquée par moulage par injection contre la partie (34) présentant le filet de vis externe (36).
